# EUROPÄISCHE PATENTANMELDUNG

(11) **EP 2 984 917 A1**
(43) Veröffentlichungstag der Anmeldung: **17.02.2016**
(21) Anmeldenummer: 15401077.1
(22) Anmeldetag: 03.08.2015
(51) Int. Cl.: A01C 7/20

(54) **SÄMASCHINE**

(30) Priorität: 13.08.2014 DE 102014111537
(71) Anmelder: Amazonen-Werke H. Dreyer GmbH & Co. KG, 49205 Hasbergen (DE)
(72) Erfinder: WILKEN, Martin, 26123 Oldenburg (DE); HÜER, Berthold, 49740 Haselünne (DE)

(57) **Zusammenfassung**

Die Erfindung betrifft eine Sämaschine umfassend eine oder mehrere Säaggregate (121), die jeweils mit einem oberen und einem unteren Lenker (123, 124) an einer Halterung (102) der Sämaschine befestigt sind. Erfindungsgemäß ist vorgesehen, dass die oberen Lenker und die unteren Lenker (123) als Einarmschwingen ausgebildet sind und einseitig mit dem Säaggregat (121) verbunden und bezüglich der Mitte (M) der Sämaschine (100) auf der Außenseite jedes Säaggregats (121) angeordnet sind.

## Beschreibung

Die vorliegende Erfindung betrifft eine Sämaschine nach dem Oberbegriff des Anspruchs 1.

Sämaschinen sind aus dem Stand der Technik bekannt. Sie umfassen üblicherweise mehrere Säaggregate, die jeweils mit einer Saatgutzuführungsleitung verbunden sind und über die Saatgut in den Boden eingebracht werden kann. Dazu sind die Säaggregate über Lenker aufgehängt, die beweglich ausgebildet sind, so dass beispielsweise der Druck der Säaggregate auf den Untergrund eingestellt werden kann oder die Säaggregate aus dem Untergrund ausgehoben werden können. Die Lenker werden üblicherweise als "Gabeln" ausgebildet, die ein Säaggregat umschließen. Sie greifen somit zweiseitig an dem jeweiligen Säaggregat an und sorgen für eine sichere Aufhängung des Säaggregats.

So zeigt beispielsweise die US 2014/0109809 eine Sämaschine mit einer parallelogrammartigen Scharaufhängung. Dabei sind sowohl der obere als auch der untere Lenker als Doppelschwingen an dem Säaggregat angelenkt und umschließen die Saatgutzuführung. Diese Anordnung ist zwar stabil, so dass Scherkräfte, die auf das Säaggregat einwirken, aufgefangen werden können und ein Versatz des Säaggregats vermieden wird, sie ist jedoch konstruktiv aufwendig.

Auch die US 8555798 zeigt eine parallelogrammartige Scharaufhängung bei der die einzelnen Lenker als Doppelschwingen ausgebildet sind.

Ausgehend von diesem Stand der Technik ist es Aufgabe der Erfindung, eine konstruktive Vereinfachung zu erreichen.

Diese Aufgabe wird erfindungsgemäß durch die Sämaschine gemäß Anspruch 1 gelöst.

Die erfindungsgemäße Sämaschine ist dadurch gekennzeichnet, dass die oberen Lenker (123) als Einarmschwingen ausgebildet sind und einseitig mit dem Säaggregat (121) verbunden sind und zumindest in ihrem mittleren Bereich bezüglich der Mitte (M) der Sämaschine (100) auf der Außenseite jedes Säaggregats (121) angeordnet sind. Hierdurch wird zumindest im mittleren Bereich der oberen Einarmschwinge eine verbesserte Durchführung der Saatgutleitung erreicht.

Eine weitere Verbesserung der Ausgestaltung der Lenker lässt sich dadurch erreichen, dass der obere Lenker und der untere Lenker als Einarmschwingen ausgebildet sind und mit dem Säaggregat einseitig verbunden und bezüglich der Mitte der Sämaschine auf der Außenseite jedes Säaggregat angeordnet sind. Es wird so eine konstruktive Vereinfachung erreicht, da die Einarmschwingen selbst aus weniger Bauteilen bestehen und eine Verbindung zum Säaggregat oder zur Sämaschine mit weniger Gelenken ausgeführt werden kann. Weiterhin ergibt sich eine Gewichtsreduktion. Als zusätzlicher Vorteil ergibt sich, dass die Saatgutzuführung einfacher zum Säaggregat geführt werden kann.

Dieser Vorteil kommt insbesondere bei weit außen an der Sämaschine angeordneten Aggregaten zum Tragen, da hier die Saatgutzuführungen, die üblicherweise von einer zentralen Saatgutversorgung zu den einzelnen Säaggregaten geführt werden, einen größeren Winkel mit den Lenkern einschließen.

Es wurde weiterhin herausgefunden, dass trotz dieser konstruktiven Vereinfachung eine ausreichende Stabilität erzielt werden kann, um die auf das Säaggregat einwirkenden Scherkräfte aufzufangen.

Gemäß einer Ausführungsform ist vorgesehen, dass der untere Lenker und/oder der obere Lenker einen von der Außenseite des Säaggregats weg gekrümmten Bereich umfasst, wobei die Saatgutzuführung durch diesen Bereich verläuft. In dem Bereich kann zusätzlicher Platz für die zumeist flexible Saatgutzuführung geschaffen werden. Weiterhin erlaubt diese Ausführung des der Lenker eine Stabilisierung des Säaggregats mit Hinblick auf seitlich auf das Säaggregat einwirkende Kräfte.

In einer Ausführungsform sind die unteren und/oder oberen Lenker bezüglich der Mitte der Sämaschine spiegelsymmetrisch zueinander angeordnet. Somit können die gleichen Lenker sowohl links als auch rechts der Maschinenmitte verwendet werden.

Weiterhin kann vorgesehen sein, dass alle unteren und/oder oberen Lenker der Sämaschine als baugleiche Bauteile ausgebildet sind, die links und rechts der Maschinenmitte verwendet werden können. Die Herstellungskosten können so erheblich reduziert werden, da für die unteren bzw. oberen Lenker stets dieselben Bauteile verwendet werden können.

Gemäß einer anderen Ausführungsform sind die unteren und/oder oberen Lenker links der Maschinenmitte andere Bauteile als die unteren und/oder oberen Lenker rechts der Maschinenmitte. Obwohl der Fertigungsprozess verkompliziert wird, können so bestimmte Anforderungen an die Lenker einfacher erfüllt werden.

In einer anderen Ausführungsform sind alle unteren und/oder oberen Lenker als voneinander verschiedene Bauteile ausgebildet. Somit können spezielle Anforderungen an die Lenker, die sich beispielsweise aus der Position jedes Säaggregats an der Sämaschine ergeben, erfüllt werden.

Es kann vorgesehen sein, dass sowohl der untere Lenker als auch der obere Lenker jeweils mit einem gemeinsamen Scharbalken zur Einstellung des Schardrucks verbunden sind. Eine Drehung des Scharbalkens kann so durch die Lenker auf die Säaggregate übertragen werden und der Schardruck entsprechend eingestellt werden.

In einer Ausführungsform ist der obere Lenker eines Säaggregats an einem ersten Aufhängungspunkt befestigt und der untere Lenker an einem zweiten Aufhängungspunkt befestigt, wobei die Aufhängungspunkte fluchten.

In einer Ausführungsform ist vorgesehen, dass die unteren und/oder oberen Lenker als kontinuierlich gekrümmtes Bauteil oder als Bauteil umfassend mehrere gerade Abschnitte, die durch gekrümmte Abschnitte verbunden sind, ausgebildet sind. Bestimmten Anforderungen, wie einer begrenzten Führung des Saatgutzuführung kann so entsprochen werden.
- Fig. 1:: Schematische Darstellung einer Sämaschine gemäß einer Ausführungsform der Erfindung.
- Fig. 2:: Detaillierte Darstellung mehrerer Säaggregate gemäß einer Ausführungsform der Erfindung.
- Fig. 3:: Detailliertere Darstellung eines Säaggregats in Schrägansicht
- Fig. 4A-D:: Darstellung mehrerer Ausführungsformen des unteren Lenkers.

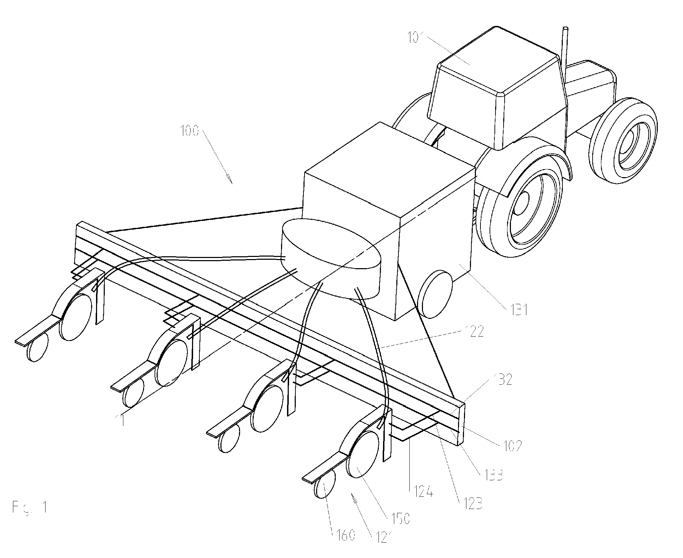

Fig. 1 zeigt eine schematische Darstellung einer erfindungsgemäßen Sämaschine. Die Sämaschine 100 umfasst ein Zugfahrzeug 101, das mit einem Anhänger und/oder einer Aufbau- oder Anbausämaschine verbunden ist. Dieser Anhänger ist die eigentliche Sämaschine und besteht üblicherweise aus einem Rahmen 102, an dem mehrere Säaggregate 121 befestigt sind. Die Säaggregate umfassen üblicherweise die eigentliche Säschar 150 und ein Rad 160, insbesondere ein Andrückrad, das das durch die Säschar eingebrachte Saatgut bei Überfahrt festdrücken kann. Weiterhin umfasst der Rahmen 102 eine üblicherweise zentrale Saatgutversorgung 131, in der Saatgut gelagert ist. Die Saatgutversorgung kann pneumatisch und/oder mechanisch ausgebildet sein. Von der Saatgutversorgung 131 führt jeweils eine Saatgutzuführung 122 zu jeweils einem Säaggregat 121. Dabei endet die Saatgutzuführung 122 im Bereich der Säschar 150 des jeweiligen Säaggregats 121. Das Säaggregat ist über obere Lenker 123 und untere Lenker 124 mit dem Rahmen 102 verbunden. Dabei kann diese Verbindung so ausgebildet sein, dass das Säaggregat 121 über die oberen und unteren Lenker gegenüber dem Rahmen 102 bewegt werden kann. Dabei kann insbesondere eine Auf- und Abbewegung gegenüber dem Rahmen 102 möglich sein. Zu diesem Zweck können die oberen und unteren Lenker jeweils an drehbar gelagerten, an dem Rahmen vorgesehenen Scharbalken 132 und 133 befestigt sein. Durch Drehung der Scharbalken kann der Schardruck du somit die Ablagetiefe des Saatgutes eingestellt werden.

Erfindungsgemäß ist vorgesehen, dass die Lenker als Einarmschwingen ausgebildet sind und nur einseitig mit dem Säaggregat 121 verbunden sind und weiterhin bezüglich der Mitte auf der Außenseite des Säaggregats 121 angeordnet sind. Wie in Fig. 1 zu erkennen ist, ergibt sich so, dass die Säaggregate links von der Mitte M auf ihrer linken Seite mit den Lenkern 123 und 124 verbunden sind, wohingegen die Säaggregate auf der Seite rechts der Mitte M auf der jeweiligen rechten Seite mit den Lenkern verbunden sind.

Dies bedeutet insbesondere, dass die Lenker nicht als Gabel um das Säaggregat 121 herum greifen sondern nur auf einer Seite an dem Säaggregat 121 angreifen. Die Saatgutzuführung 122 kann so auch im Bereich der oberen und unteren Lenker entlanggeführt werden, ohne dass es hier zu Beeinträchtigungen kommt. Dies ist insbesondere dann wichtig, wenn das betreffende Säaggregat 121 weit außen am Rahmen 102 angeordnet ist, da hier der Winkel zwischen der Saatgutzuführung und dem oberen und unteren Lenker groß ist.

Die Erfindung ist auch in vorteilhafterweise bei mehrreihigen Sämaschinen, beispielsweise doppelreihigen Sämaschinen anwendbar. Bei diesen Sämaschinen sind die Säaggregate in mehreren Reihen versetzt zueinander angeordnet. Durch die Platzersparnis der nur noch einarmigen Lenker können die Reihen deutlich dichter angeordnet werden.

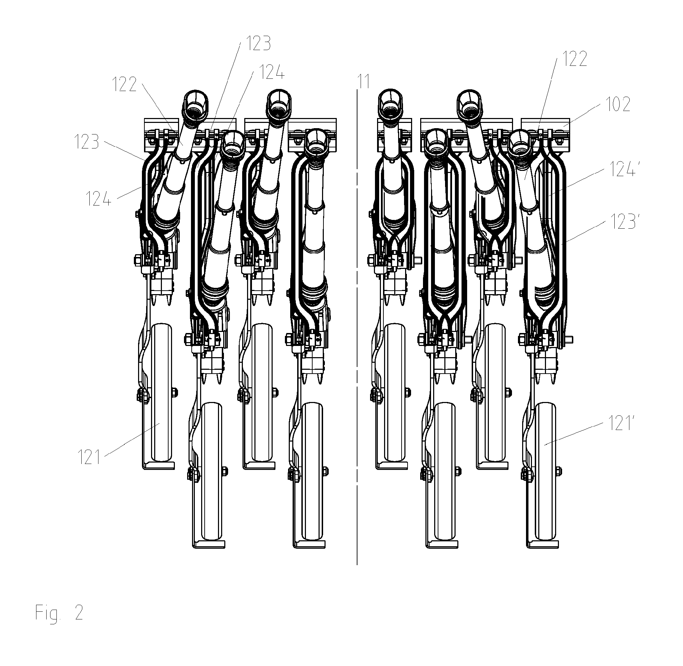

Fig. 2 zeigt eine detaillierte Darstellung mehrerer Säaggregate 121 und 121 in einer solchen mehrreihigen Sämaschine. Die Aggregate sind um die Mitte M der Sämaschine 100 angeordnet. Wie hier zu erkennen ist, vergrößert sich der Winkel, den die Saatgutzuführung 122 mit der durch die Mitte M verlaufenden Ebene einschließt, je weiter das Säaggregat 121 von der Mitte M entfernt ist. Durch einseitiges Anbringen der Lenker an der von der Mitte aus gesehenen Außenseite des Säaggregats 121 kann eine Beeinträchtigung der Saatgutzuführung 121 effektiv vermieden werden.

In der in Fig. 2 dargestellten Ausführungsform ist die Anordnung der oberen Lenker 123 und 123' bzw. der unteren Lenker 124 und 124' des Säaggregats 121 und des Säaggregats 121' bezüglich der Mitte M spiegelsymmetrisch. Dies bringt den Vorteil mit sich, dass die oberen und unteren Lenker in der Erfindung gemäß einer Ausführungsform für alle Säaggregate als gleiche Bauteil gefertigt sind, wobei sie bei Verwendung links der Mitte M um 180° gedreht bezüglich einer Verwendung rechts der Mitte angeordnet werden. Dies ergibt einen weiteren Vorteil, da so die Produktion der einzelnen Säaggregate bzw. der oberen und unteren Lenker erheblich vereinfacht und damit kostengünstiger gestaltet werden kann, da für jedes Säaggregat unabhängig von seiner Position und unabhängig von der Entfernung zur Mitte M dieselben Lenker 123 und 124 verwendet werden können. Dabei ist vorgesehen, dass nicht nur die Form der Bauteile, sondern auch Verbindungsstellen beispielsweise für Gelenke so ausgebildet sind, dass sie sowohl links als auch rechts der Mitte M mit den vorgesehenen Bauteilen verbunden werden können (beispielsweise mit den Gelenken).

Diese Ausführungsform ist jedoch nicht zwingend, vielmehr können für die einzelnen Säaggregate auch abhängig von ihrer Position unterschiedlich geformte obere und untere Lenker verwendet werden, wobei vorzugsweise zumindest für bezüglich der Mitte M symmetrisch zueinander angeordnete Säaggregate gleich konstruierte obere und untere Lenker verwendet werden.

Besonders bevorzugt ist es, wenn der obere Lenker und der untere Lenker eines Säaggregats gleiche bzw. identische Bauteile sind. So kann die Produktion noch weiter vereinfacht werden, da nur noch ein stets identisches Bauteil hergestellt werden muss.

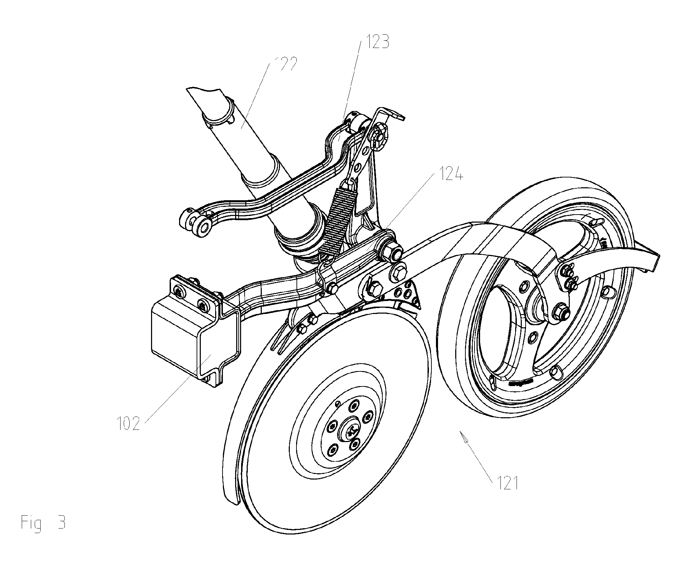

Fig. 3 zeigt eine weitere Ausführungsform eines Säaggregats 121 die über die oberen Lenker 123 in den unteren Lenker 124 an dem Rahmen 102 angeordnet ist. In der Darstellung gemäß Fig. 3 ist insbesondere die Führung der Saatgutzuführung 122 durch den Bereich der oberen Lenker 123 und der unteren Lenker 124 zu erkennen. Dabei erlaubt die Erfindung eine ungehinderte Führung der Saatgutzuführung 122 in diesem Bereich, wobei auch eine Bewegung der oberen und unteren Lenker 123 und 124 ohne weiteres möglich ist. So kann beispielsweise über die Bewegung dieser Lenker das Säaggregat 121 aus dem Boden ausgehoben werden, wobei natürlich eine Bewegung der Saatgutzuführung 122 erfolgt.

Da die Saatgutzuführung 122 üblicherweise als flexibler Schlauch ausgebildet ist, der einen Durchmesser von einigen bis zu 7 oder 8 cm hat, erfolgt beim Ausheben des Säaggregats 121 vom Boden natürlich ein Stauraum des Schlauchs der Saatgutzuführung 122. Da der obere Lenker 123 und der untere Lenker 124 gemäß der in Fig. 3 dargestellten Ausführungsform jedoch von der Mitte der Sämaschine aus betrachtet nach außen gekrümmt sind, kann diese Verbiegung des Schlauchs der Saatgutzuführung 122 kompensiert werden und eine Berührung bzw. Beschädigung der Saatgutzuführung durch die Lenker 123 und 124 verhindert werden.

Da die Saatgutführung 122 üblicherweise als teleskopierbare Rohre ausgebildet ist, die einen Durchmesser von bis zu 7 oder 8 cm haben, erfolgt beim Ausheben aus dem Boden und Absenken des Säaggregats 121 in den Boden natürlich eine Änderung der Lage des Rohres. Da der obere Lenker 123 und der untere Lenker 124 gemäß der in Fig. 3 dargestellten Ausführungsform jedoch von der Mitte der Sämaschine aus betrachtet nach außen gekrümmt sind, kann diese Verschiebung des Rohres der Saatgutzuführung 122 kompensiert werden und eine Berührung bzw. Beschädigung der Saatgutzuführung durch die Lenker 123 und 124 verhindert werden.

In der in Fig. 3 dargestellten Ausführungsform ist es besonders vorteilhaft, wenn der obere Lenker und der untere Lenker an den jeweiligen Aufhängungspunkten am Rahmen fluchtend zueinander angeordnet sind. Dies bedeutet, dass die Verbindungslinie zwischen dem Aufhängungspunkt des unteren Lenkers und dem Aufhängungspunkt des oberen Lenkers parallel zu einer durch die Mitte der Sämaschine verlaufenden Ebene ist. Dabei ist die Ebene senkrecht zum Boden, auf dem die Sämaschine steht. Alternativ kann jedoch auch vorgesehen sein, dass der Aufhängungspunkt des oberen Lenkers mit einem Versatz zum Aufhängungspunkt des unteren Lenkers vorgesehen ist, wobei dieser Versatz in Bezug auf die Mitte der Sämaschine vorgesehen ist. Der Abstand des Aufhängungspunktes des unteren Lenkers zur Mitte der Sämaschine ist also größer oder kleiner als der Abstand des Aufhängungspunktes des oberen Lenkers zur Mitte M der Sämaschine.

Um eine möglichst gute Stabilisierung des Säaggregats 121 gegen Scherkräfte, die senkrecht zur Bewegungsrichtung der Säschar einwirken können, zu gewährleisten, sind der obere und untere Lenker jeweils so angeordnet und mit dem Rahmen und dem Säaggregat verbunden, dass sich eine parallelogrammartige Aufhängung des oberen und unteren Lenkers ergibt, da diese Aufhängung gegen einwirkende Scherkräfte eine besonders hohe Stabilität aufweist. Da in dem Bereich zwischen dem unteren Lenker 124 und dem oberen Lenker 123 ein gewisser Platz zur Verfügung steht, kann selbst bei Bewegung des Säaggregats 121 sichergestellt werden, dass die Saatgutzuführung 122 nicht beschädigt wird.

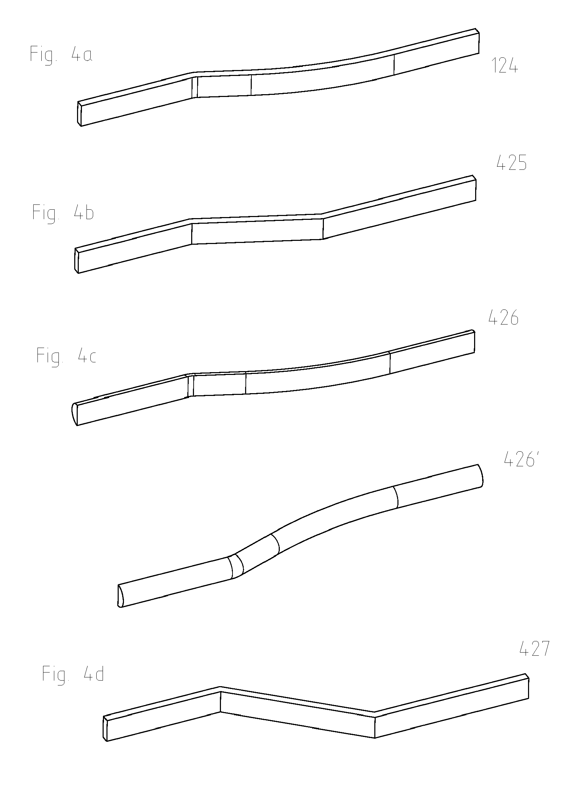

Fig. 4 zeigt mögliche Ausführungsformen der Lenker. Dabei ist in den Fig. 4A bis 4D der Lenker nur als einstückiges, massives Bauteil dargestellt. Es versteht sich jedoch von selbst, dass der Lenker (unterer und/oder oberer Lenker) auch als mehrstückiges Bauteil ausgebildet sein kann, das beispielsweise aus mehreren Komponenten besteht die miteinander verschraubt oder anderweitig verbunden werden können.

Gemäß Fig. 4A können die Lenker als kontinuierlich gekrümmtes Bauteil, beispielsweise aus Metall, ausgebildet sein. An den jeweiligen Enden kann der Lenker dann Anschlussstellen, beispielsweise Öffnungen für Verschraubungen oder Gelenke, umfassen. Bevorzugt werden Materialien verwendet, die eine hohe Steifigkeit in einer Ebene senkrecht zur Längsachse des Bauteils (gegeben durch die Richtung, in der das Bauteil die größte Ausdehnung hat) aufweisen. Andererseits kann auch durch die gewählte Form die Steifigkeit des Bauteils in Bezug auf einwirkende Scherkräfte verändert werden. Die Krümmung des Lenkers erfolgt dabei weg von dem Säaggregat, bzw. weg von der Maschinenmitte.

Wird der Lenker als ein kontinuierlich gekrümmtes, einstückiges Werkstück ausgebildet, so vereinfacht sich der Herstellungsprozess, da das Werkstück aus einem einzigen geraden Werkstück beispielsweise durch Erhitzen und deformieren hergestellt werden kann. Gerade Werkstücke sind in der Industrie leicht zu fertigen, weshalb ein entsprechender Lenker kostengünstig hergestellt werden kann. Werden für die Sämaschine auch konstruktiv gleiche Bauteile verwendet, so können die Herstellungskosten noch weiter gesenkt werden.

Gemäß Fig. 4B ist der Lenker 425 als Werkstück mit mehreren Kanten ausgebildet. Diese kantige Struktur kann dazu dienen, die Saatgutzuführung in einem bestimmten Bewegungsbereich zu fixieren. So kann beispielsweise auch angedacht sein, dass der Lenker 425 eine begrenzte Ausbuchtung umfasst und die Saatgutzuführung in dieser Ausbuchtung eingebettet ist. Eine Begrenzung des Bewegungsspielraums der Saatgutzuführung kann so auf konstruktiv einfache Weise sichergestellt werden. Durch geeignete Wahl der Krümmung kann auch die Steifigkeit der Lenker verändert werden. Während bezüglich möglicher einwirkender Scherkräfte eine hohe Steifigkeit in der Richtung der wirkenden Scherkräfte bevorzugt ist, kann in anderen Richtungen auch eine gewisse Flexibilität wünschenswert sein.

Es kann weiterhin vorgesehen sein, dass der Lenker aus geraden Abschnitten besteht, die durch gekrümmte Abschnitte miteinander verbunden ist, wie dies beispielsweise schon in Fig. 2 und Fig. 3 zu erkennen ist.

In Fig. 4C ist eine weitere Ausführungsform des Lenkers 496 dargestellt. Diese Ausführungsform ähnelt in der geometrischen Struktur der Ausführungsform gemäß Fig. 4A. Jedoch umfasst die in Richtung der Mitte der Sämaschine zeigende Fläche des Lenkers, wie sie mit 426' dargestellt ist, eine stumpfe, in sich gekrümmte Oberfläche. Diese kann beispielsweise in Form eines Zylindermantelausschnitts ausgebildet sein. Insbesondere kann die gesamte Oberflächenkontur in diesem Bereich des Lenkers kantenlos sein. Die kantenlose Ausführung der Oberflächenkontur zumindest in dem Bereich, der in die Mitte der Sämaschine zeigt, erlaubt eine Minimierung des Beschädigungsrisikos der Saatgutzuführung, wenn der Lenker gegenüber der Saatgutzuführung bewegt wird. Diese Ausführungsform kann natürlich auch mit der Ausführungsform gemäß Fig. 4B kombiniert werden. Der Bereich, in dem die Saatgutzuführung dann zumindest in ihrer Bewegung begrenzt ist, wird dann nicht mehr durch Kanten begrenzt sondern durch gekrümmte und insbesondere kantenlose Flächen. So kann eine Begrenzung des Bewegungsspielraums der Saatgutzuführung erreicht werden und gleichzeitig das Beschädigungsrisiko der Saatgutzuführung verringert werden.

Fig. 4D zeigt eine Ausführungsform, bei der der Lenker 427 nicht wie in der Ausführungsform gemäß Fig. 4A bis Fig. 4C als Bauteilen in einer Ebene ausgebildet ist, sondern sich sowohl in der Ebene erstreckt in der die Lenker gemäß den Ausführungsformen Fig. 4A bis Fig. 4C sich erstrecken, als auch in einer Ebene senkrecht dazu. Dies kann dann notwendig werden, wenn der Aufhängungspunkt des Lenkers in einer anderen Höhe über dem Boden angeordnet ist als der Aufhängungspunkt bzw. der Verbindungspunkt des Lenkers mit dem Säaggregat.

## Patentansprüche

1. Sämaschine (100) umfassend eine oder mehrere Säaggregate (121), die jeweils mit einem oberen und einem unteren Lenker (123, 124) an einer Halterung (102) der Sämaschine befestigt sind, **dadurch gekennzeichnet, dass** die oberen Lenker (123) als Einarmschwingen ausgebildet sind und einseitig mit dem Säaggregat (121) verbunden sind und zumindest in ihrem mittleren Bereich bezüglich der Mitte (M) der Sämaschine (100) auf der Außenseite jedes Säaggregats (121) angeordnet sind.

2. Sämaschine nach Anspruch 1, **dadurch gekennzeichnet, dass** oberen Lenker (123) und die unteren Lenker (124) als Einarmschwingen ausgebildet sind und einseitig mit dem Säaggregat (121) verbunden sind und bezüglich der Mitte (M) der Sämaschine (100) auf der Außenseite jedes Säaggregats (121) angeordnet sind.

3. Sämaschine nach Anspruch 1, **dadurch gekennzeichnet, dass** der untere Lenker (124) und/oder der obere Lenker (123) einen von der Außenseite des Säaggregats weg gekrümmten Bereich umfasst, wobei die Saatgutzuführung durch diesen Bereich verläuft.

4. Sämaschine nach zumindest einem der vorstehenden Ansprüche, **dadurch gekennzeichnet, dass** die unteren Lenker und/oder die oberen Lenker bezüglich der Mitte der Sämaschine spiegelsymmetrisch zueinander angeordnet sind.

5. Sämaschine nach einem der zumindest einem der vorstehenden Ansprüche, **dadurch gekennzeichnet**, alle unteren und/oder oberen Lenker der Sämaschine als baugleiche Bauteile ausgebildet sind, die links und rechts der Maschinenmitte verwendet werden können.

6. Sämaschine nach zumindest einem der vorstehenden Ansprüche, **dadurch gekennzeichnet, dass** die unteren und/oder oberen Lenker links der Maschinenmitte andere Bauteile als die unteren und/oder oberen Lenker rechts der Maschinenmitte sind.

7. Sämaschine nach Anspruch zumindest einem der vorstehenden Ansprüche, **dadurch gekennzeichnet, dass** alle unteren und/oder oberen Lenker als voneinander verschiedene Bauteile ausgebildet sind.

8. Sämaschine nach zumindest einem der vorstehenden Ansprüche, **dadurch gekennzeichnet, dass** die unteren Lenker und die oberen Lenker jeweils mit einem gemeinsamen Scharbalken (132, 133) zur Einstellung des Schardrucks verbunden sind.

9. Sämaschine nach Anspruch 8, **dadurch gekennzeichnet, dass** der obere Lenker eines Säaggregats an einem Aufhängungspunkt befestigt ist und der untere Lenker des Säaggregats an einem anderen Aufhängungspunkt befestigt ist, wobei die Aufhängungspunkte fluchtend angeordnet sind.

10. Sämaschine nach zumindest einem der vorstehenden Ansprüche, **dadurch gekennzeichnet, dass** die unteren und/oder oberen Lenker als kontinuierlich gekrümmtes Bauteil oder als Bauteil umfassend mehrere gerade Abschnitte, die durch gekrümmte Abschnitte verbunden sind, ausgebildet sind.
